# EUROPEAN PATENT APPLICATION

(11) **EP 2 284 647 A2**
(43) Date of publication of application: **16.02.2011**
(21) Application number: 10172177.7
(22) Date of filing: 06.08.2010
(51) Int. Cl.: G06F 1/16, G06F 3/048

(54) **Portable computer with touch panel display**

(30) Priority: 06.08.2009 JP 2009183209
(71) Applicant: Square Enix Co., Ltd., Shibuya-ku Tokyo 151-8544 (JP)
(72) Inventor: Aoyagi, Hidetoshi, Tokyo Tokyo 151-8544 (JP); Ando, Takehiro, Tokyo Tokyo 151-8544 (JP)
(74) Representative: Gulde Hengelhaupt Ziebig & Schneider

(57) **Abstract**

A portable computer is comprised of means for computing and determining whether a main body of the portable computer was rotated in a horizontal plane by predetermined degrees, means for determining that a request of change of dominant hand was inputted when the main body has rotated by the predetermined degrees, means for switching a dominant hand setting when the request of change of the dominant hand was inputted, means for reversing a game image and displaying the reversed image after switching the dominant hand setting, and means for switching a display position of a user interface element and displaying the switched one and for switching program for controlling the user interface element.

## Description

### CROSS REFERENCE TO RELATED APPLICATION

The present disclosure relates to subject matter contained in Japanese patent application No.2009-183209 filed on August 6, 2009, the disclosure of which is expressly incorporated herein by reference in its entirety.

### TECHNICAL FIELD

This invention relates to a portable computer with a touch panel display wherein a display screen serves as touch panel input means.

### BACKGROUND ART

In the specification, a "portable computer" is constituted by, for example, a portable game apparatus. Such a portable game apparatus is constituted by, for example, not only a dedicated game apparatus but also a portable multifunctional terminal having functions, such as a portable phone terminal, and a portable music/image reproduction terminal, with which a user may also play a game.

The portable computer is much more likely to have a touch panel type of input means using a screen of the display rather than a keyboard type of input means in order to provide the broadest display area as possible. In such a case, operation keys for inputting user's instructions are displayed on the display as a so-called graphical user interface (GUI), and the user inputs various kinds of instructions to the portable computer through the GUI.

Conventionally, the positions of the graphical user interface elements on the display are set by default on the assumption that a dominant hand of most users is a right hand (or a left hand). In a case where a left-handed user (or a right-handed user) wants to change the default setting of dominant hand, he/she has to open a setting screen provided separately from a normal operation screen of the application in order to reset the default setting. This operation is troublesome, and takes the user a long time.

Japanese patent application publication No.H09-305315 published on November 28, 2007 has proposed a method in which a pressure sensor is provided at a right side portion or a left side portion of a housing of a machine, and the side on which a user holds the machine housing (right side or left side) is detected. Then, according to the method, an opposite side of the side on which the user holds the machine housing is determined to be the user's dominant hand, and an operation key is displayed at the position on the display corresponding to the dominant hand.

### SUMMARY OF THE INVENTION

According to such a method, it is not possible to detect the holding side of the machine housing if the user does not correctly hold the portion where the pressure sensor is located in the machine housing. Then, obstructions such as erroneous operation or detection failure may occur.

Thus, the object of the invention is to provide a portable computer, such as a portable game apparatus, with a small display having a touch panel input function on which a GUI is displayed, , wherein the dominant hand of the user can be easily switched without opening a screen for setting the dominant hand. According to a first aspect of the invention, there is provided a portable computer having a main body and a display provided on the main body that serves also as touch panel input means, which portable computer performs processing corresponding to a user interface element by touching the user interface element displayed at a predetermined display position of the display in accordance with a dominant hand setting. The portable computer includes an attitude detecting sensor that detects an attitude of the main body on a horizontal plane in real time. The portable computer further includes a first memory that stores the dominant hand setting of the portable computer, allowing the dominant hand setting to be switched between a setting for a right-handed person and a setting for aleft-handedperson. Theportablecomputerfurther includes a second memory that stores a display position of the user interface element on the display in association with each of the dominant hand settings for the right-handed person and the left-handed person, and a user interface controlling program corresponding to the user interface element displayed at the display position. The portable computer further includes a rotation angle determiner that computes change of the attitude of the main body on the horizontal plane over time based upon signals from the attitude detecting sensor, and determines whether the main body has been rotated by predetermined degrees on the horizontal plane. The portable computer further includes a dominant hand setting switching request determiner that determines that the user has inputted a request of switch of the dominant hand setting in a case where the rotation angle determiner determines that the main body has been rotated by the predetermined degrees on the horizontal plane. The portable computer further includes a dominant hand setting switcher that switches the dominant hand setting in the first memory into the setting for the dominant hand different from the current setting in a case where of the dominant hand setting switching request determiner has determined that the user has inputted the request of the switch of the dominant hand setting. The portable computer further includes a control subject image reverser that displays an image that is a subject to control on the display by reversing the image which has been displayed before the main body has been rotated by predetermined degrees on the horizontal plane by 180 degrees in a case where the dominant hand setting switcher has switched the dominant hand setting into the dominant hand setting different from the current setting. The portable computer further includes a user interface element switcher in a case where the dominant hand setting switcher has switched the dominant hand setting into the setting for the dominant hand different from the current setting, that switches the display position of the user interface element on the display from the display position corresponding to the current dominant hand setting into the display position corresponding to the dominant hand setting switched by the dominant hand switcher that is stored in said second memory and switches the user interface controlling program into the user interface controlling program corresponding to the switched display position of the user interface element that is stored in said second memory.

According to the first aspect of the invention, the request of change of the dominant hand of the user is received by only rotating the main body on the horizontal plane, and the position of the operation key to be displayed on the display is switched between the position for the right-handed person and the position for the left-handed person, and the program for controlling user interface element is also switched thereby. Therefore, it is not necessary to stop the operation in an application and open a set screen in order to set the change of the dominant hand, and it is possible to change the setting of the dominant hand in a short time.

Besides, the change of the dominant hand can be set by only rotating the main body predetermined degrees on the horizontal plane. Then, it is not necessary for the user to do a troublesome operation, that is, not necessary to correctly hold the portion where the pressure sensor of the machine housing is located, and it is possible to do the change operation intuitively without error.

The second aspect of the invention is the portable computer with touch panel display, wherein the dominant hand setting switching request determiner has a clocking determiner that determines whether the main body starts to rotate on the horizontal plane and rotates by the predetermined degrees within a predetermined time, and wherein, in a case only where the clocking determiner determines that the main body has started to rotate on the horizontal plane and has rotated by the predetermined degrees within the predetermined time, the dominant hand setting switching request determiner determines that the request of changing the dominant hand setting was inputted from the user.

According to the second aspect of the invention, in such a case only where the clocking determiner determines that the main body started to rotate on the horizontal plane within the predetermined time and rotated by the predetermined degrees, it is determined that the request of changing dominant hand was inputted from the user. By doing so, such an error judgment may be avoided that the request of change of the dominant hand was inputted by reason that the main body was rotated accidentally or without the user's intention.

A third aspect of the invention is the portable computer with touch panel display, wherein the dominant hand setting switching request determiner determines whether the user has inputted the request of the switch of the dominant hand by parameterizing a form of the rotation of the main body computed based upon output from said attitude detecting sensor.

According to the third aspect of the invention, it is judged that the user has inputted the request of change of the dominant hand by parameterizing the form of rotation of the main body computed based upon the output from the attitude detecting sensor. By doing so, it is possible to avoid an error operation due to the reason that the user rotates the main body with no purpose or rotates the main body unintentionally.

### BRIEF DESCRIPTION OF DRAWINGS

[Fig.1] Fig.1 is a view of a game screen for a right-handed person of a portable computer constituted by a portable game apparatus to which the invention is applied.
[Fig.2] Fig.2 is an exemplary view showing the game screen for a left-handed person, which is switched from the game screen shown in Fig.1.
[Fig.3] Fig.3 is a typical view of a control block diagram of the portable computer constituted by the portable game apparatus to which the invention is applied.
[Fig.4] Fig.4 is a view of the screen for the right-handed person of the portable computer to which the invention is applied.
[Fig.5] Fig.5 is a view of the screen for the left handed person of the portable computer to which the invention is applied.

### DESCRIPTION OF EMBODIMENTS

An embodiment of the invention will be explained hereinafter, referring to appended drawings.

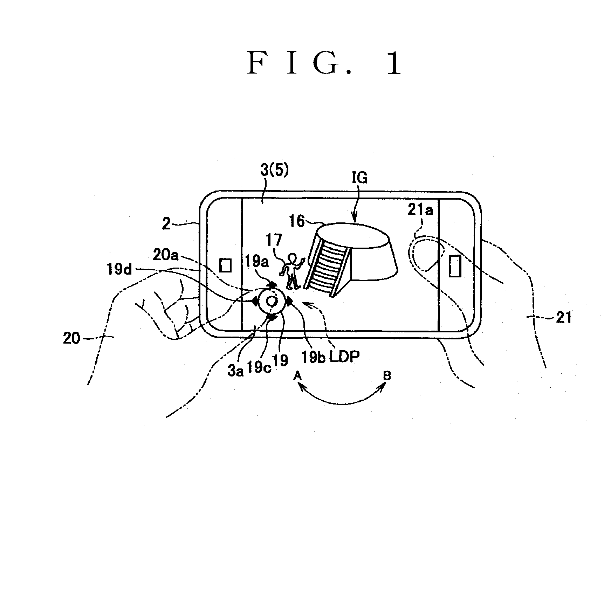

Fig.1 shows a portable game apparatus serving as a game apparatus constituting a portable computer. As shown in Fig.1, a portable game apparatus 1 has a main body 2 constituted by a portable housing, and the main body 2 has a display 3. The display 3 also functions as a touch panel input section 5, and a player, that is, a user of the portable computer, is able to select various kinds of objects displayed on a screen 3a of the display 3, such as an operation key, a cursor, an icon and a character, by pressing down such objects so that the portable computer 1 executes various kinds of procedures corresponding to the objects. The detailed explanation of an input method using a touch panel will not be given since such a system is well known. In a case of the portable game apparatus 1 as shown in Fig.1, all data inputs are made by touching the screen 3a of the display 3 with a finger.

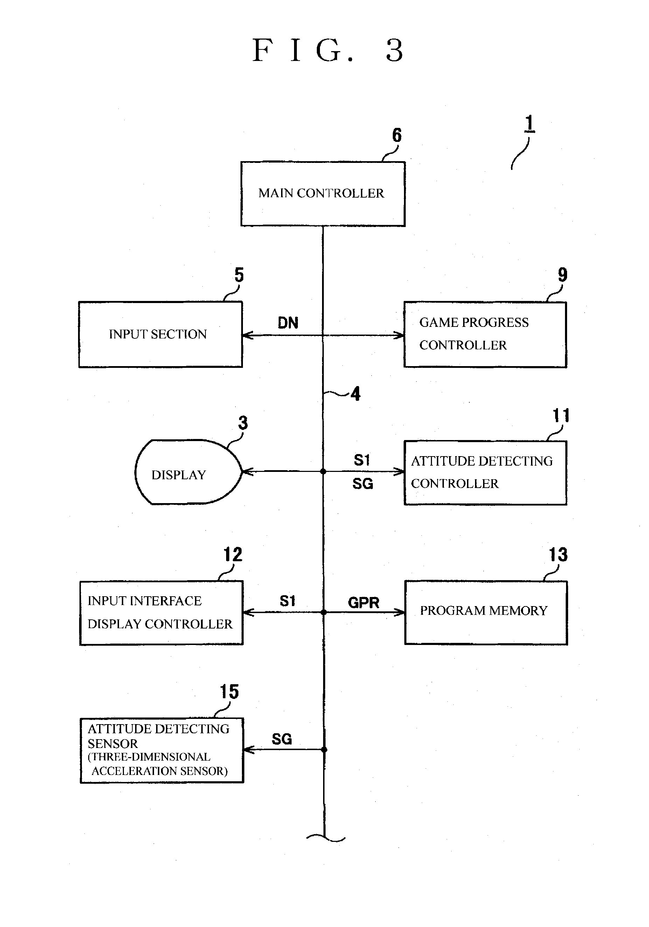

As shown in Fig.3, the portable game apparatus 1 constituting a portable computer has a main controller 6. The touch panel input section 5, a game progress controller 9, the display 3, an attitude detecting controller 11, an input interface display controller 12, a program memory 13, and an attitude detecting sensor 15 are connected with the main controller 6 through a bus line 4. All of these components are provided in the main body 2, and when the user carries the main body 2 with him/her, it means that the user carries the portable game apparatus 1 constituting a portable computer. The block diagram of Fig.3 exemplarily shows only portions pertinent to the invention, and not all components of an actual portable computer constituted by the portable game apparatus 1 are shown in the figure.

In the portable game apparatus 1 as shown in Fig.3, actually, a computer executes a predetermined program read out of the program memory 13, so that a CPU (not shown) or a memory operates in a time-shared manner by multitasking to execute functions of respective blocks as shown in Fig.3. Alternatively, the portable game apparatus 1 may be constituted from hardware corresponding to the respective blocks, and each block may be controlled by a CPU or a MPU that is separately provided for each block.

When a user plays a game with the portable game apparatus 1 having the above-mentioned structure, the user instruct the start of the game through an operation of the touch panel input section 5 as shown in Fig.3. Receiving such an instruction, the main controller 6 instructs the game progress controller 9 to execute the game, and the game progress controller 9 reads a predetermined program GPR out of the program memory 13 and executes such program.

In a game according to the game program GPR, a predetermined game image IG as shown in Fig. 1, for example, is displayed on the screen 3a of the display 3 by the game progress controller 9 based upon objects that are set in a two-dimensional or three-dimensional virtual space set in a memory (not shown) in the game progress controller 9. The game image IG includes a building 16 and a character 17 operable by a user, for example. An image of an operation button 19 serving as a user interface element constituted by an operation key is displayed through the input interface display controller 12 on a left side of the display 3 in Fig.1. The image of the operation button is superimposed on the game image IG on the display 3. When a finger of a user touches, for example, a position corresponding to the operation button 19 displayed on the display 3, that is, touches the vicinity of either one arrow of four arrows 19a, 19b, 19c and 19d projecting in the up, down, right and left directions of the operation button 19, the touch panel input section 5 detects a coordinate of a position touched by the finger of the user according to program for controlling operation keys mentioned hereinafter. Then, the touch panel input section 5 computes a direction DN instructed by the user with a well-known method, in association with the display position of the arrows 19a, 19b, 19c and 19d of the operation button 19 displayed on the display 3. Then, the touch panel input section 5 outputs the computation result to the game progress controller 9. In the specification, an image mainly displayed on the display other than the images of the user interface elements constituted by, for example, the operation key is referred to as a control subject image, such as the game image IG, which is controlled by command inputs through the operation key.

The game progress controller 9 moves the image of the character 17 of the game image IG serving as the control subject image in the direction DN instructed by the user on the screen based upon the direction DN computed by the input section 5 so as to advance a predetermined scenario.

The position of the operation button 19 displayed on the display 3 by the input interface display controller 12 is a left lower part of the screen 3a of the display 3 in Fig.1. The operation button is also displayed in the left lower part of the game image IG displayed in the portable game apparatus 1. In this case, needless to say, the game image IG is displayed in "a normal positional display state", in which an upper portion of the game image IG is arrange on a upper side of the screen 3a of the display 3 in Fig.1 and a lower portion of the game image IG is arranged on a lower side of the screen 3a of the display 3 in Fig.1. This "normal positional display state" means a state in which the game image IG is displayed on the display 3 with the upside thereof being in the upper portion in the figure when the user holds the portable game apparatus 1 as shown in Fig.1 in the right hand 21 and the left hand 20.

In Fig.1, the user operates the operation button 19 with a thumb 20a of the left hand 20. Thus it is presumed that the user is a right-handed person. Generally, the input interface display controller 12 sets a right-handed display as a default, in which the operation keys, especially the operation button 19 serving as an operation key for instructing a direction for moving the character 17, is displayed on the left lower portion in Fig.1 in the game image IG being in the correct positional display state. A setting status of dominant hand in the present portable game apparatus 1 is stored in a proper memory in the input interface display controller 12. The dominant hand setting status is switched and renewed between "a right-handed" and "a left-handed" through an operation for changing a dominant hand mentioned hereinafter.

In this case, the left-handed user, who wishes to operate the operation button 19 with a thumb 21a of the right hand 21, finds it difficult to operate the operation button 19 displayed for the right-handed person by the input interface display controller 12 in the default position. Then, the left-handed user turns over the main body 2 of the portable game apparatus 1 by 180 degrees in a direction as shown by arrows A and B on a horizontal plane in order to arrange the operation button 19 displayed on the display 3 on a side of the left hand 20 of the user even in the course of the progress of the game scenario by the game progress controller 9.

When a force of rotation in a horizontal direction (or any type of rotation being available as long as the force can rotate the main body 2 in a three-dimensional direction and such a rotation has horizontal component) acts on the main body 2 of the portable game apparatus 1 while the user is playing the game, that is, while the game progress controller 9 is controlling the progress of the game scenario, a three-dimensional acceleration sensor serving as the attitude detecting sensor 15 detects its movement. Then, the three-dimensional acceleration sensor 15 outputs an acceleration acting on the main body 2 as a signal SG to the attitude detecting controller 11 serving as rotational angle determining means, dominant hand change request determining means and timer means. The three-dimensional acceleration sensor constituting the attitude detecting sensor 15 is constituted by a well-known sensor for measuring the acceleration in a three-dimensional direction (that is a vector value and has size and direction). The three-dimensional acceleration sensor constituting the attitude detecting sensor 15 always detects the acceleration in the three-dimensional direction acting on the main body 2 and outputs its measurement result as the signal SG.

The attitude detecting controller 11 extracts the horizontal component from the signals SG and integrates such component so as to compute the rotational angle of the main body 2 on the horizontal plane and to compute the rotational angle α of the main body 2 on the horizontal plane. The attitude detecting controller 11 starts to compute time T elapsed from a start of the movement of the main body 2 in the horizontal direction (the rotational movement having horizontal component), that is, from a point of time when the attitude detecting sensor 15 detects the movement of the main body 2 and outputs the signals SG. The attitude detecting controller 11 determines whether the main body 2 has been rotated by 180 degrees on a horizontal plane within a predetermined time DT, such as, for example, within one second. In a case where the attitude detecting controller 11 determines that the main body 2 has been rotated by 180 degrees on a horizontal plane in a predetermined time, the attitude detecting controller 11 determines that the user has input a request of changing the dominant hand setting through the main body 2. Then, the input interface display controller 12 changes the display position of the operation button 19 constituting an operation key and reverses the game image IG. Such an operation by the input interface display controller 12 will be described in detail later. In a case where the main body 2 has not been rotated by 180 degrees on a horizontal plane within the predetermined time, the attitude detecting controller 11 determines that such the movement of the main body 2 is an unnatural operation for inputting the request of changing the dominant hand setting to the portable game apparatus 1. In other words, the attitude detecting controller 11 determines that the main body 2 has been rotated accidentally or regardless of user's intention of inputting the request for changing the dominant hand setting. That is, the attitude detecting controller determines that the request for changing the dominant hand setting has not been input. Then, no processing procedure is conducted thereafter, ignoring the signal SG from the attitude detecting sensor 15.

In the above description, the attitude detecting controller determines that the request for changing the dominant hand setting is input in a case where the rotational angle of the main body 2 is 180 degree, however, it may determine that the user has inputted the request for changing the dominant hand setting in a case where the rotational angle is within predetermined bounds, such as 150 to 210 degrees for example, as long as the reverse of the main body 2 on the horizontal plane is estimated. Furthermore, the attitude detection controller 11 may determine whether the request for changing the dominant hand setting has been input by using, as a parameter, not only the rotational angle of the main body 2 but also other forms of rotation, such as an operation of acceleration at the time of rotating the main body 2, duration time of the rotational speed of the main body 2 and/or continuous time of the rotational movement in the horizontal rotational direction. Thus, the attitude detecting controller 11 may determine whether the request for changing the dominant hand setting is inputted in a case where an lower rotational angle, such as the rotation of the main body 2 by 150 degrees, is detected so that rapid processing of changing the dominant hand setting can be executed.

In a case where the user takes action of rotating the main body 2 with no purpose or unconsciously for example, or, in a case where the main body 2 naturally rotates due to some reasons, the acceleration acting on the main body 2 is likely to be non directive in the three-dimensional direction. Further, in such a case, it is likely that the rotational speed of the main body 2 in the horizontal direction changes greatly and the rotational direction constantly changes in the three-dimensional direction. Also, it is likely that the duration time of the rotational movement shows intermittent pattern in a short time. On the other hand, in a case where the user rotates the main body 2 on the horizontal plane with a clear intension, such as change of the dominant hand setting, components of the rotational actions of the main body 2, that is, the direction of the acceleration and the direction of the speed are main elements for producing the rotation of the main body 2 on the horizontal plane. Thus, the acceleration acting on the main body 2 has a strong directivity of the rotation in the horizontal direction, that is, the components in the horizontal direction are larger than the components in the other directions. As the result, the rotational speed of the main body 2 in the horizontal direction changes little, and the rotational direction is almost constant in a horizontal direction.

Then, the attitude detecting controller 11 may determine whether the request for changing the dominant hand setting is input from the user through the main body 2 not only by computing the rotational angle of the main body 2 in the horizontal direction based upon the signal SG from the attitude detecting sensor 15 but also by determining the form of rotation such as the acceleration or the direction of speed consisting the rotational action. In a case where the attitude detecting controller 11 determines that the directivity of the rotation in the horizontal direction is great, it may determines that the user has inputted the request for changing the dominant hand setting through the main body 2. Concrete value of the acceleration and the direction of the speed may be properly set through experiments and the like. The presence of the request for changing the dominant hand setting by the user may be determined more accurately by parameterizing the forms of the rotation of the main body 2. In a case where the attitude detecting controller 11 determines that no request for changing the dominant hand setting is detected from the detected rotational action of the main body 2, a dominant hand setting changing signal S1, which will be described later, is not outputted to the input interface display controller 12 even in a case where the main body 2 finishes the 180 degrees rotation in the horizontal direction in a predetermined time DT. Accordingly, the processing procedure for reverse display of the game image IG or the processing procedure for switching the display position of the operation button 19 is not conducted.

It is possible to avoid error action due to an unconscious rotational action or a movement action by the user that is not based upon the request of changing the dominant hand by counting the elapsed time T from the start to finish of the rotational action of 180 degrees of the main body 2 by the user to determine whether the rotational action has finished in a predetermine time DT

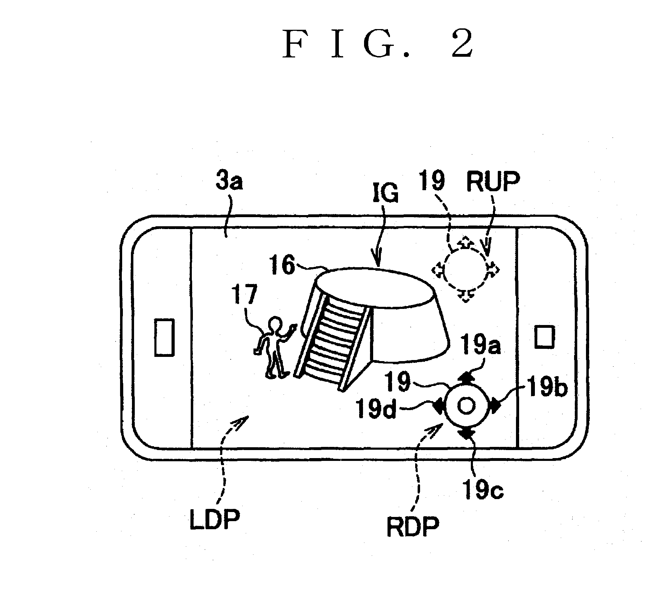

When the main body 2 of the portable game apparatus 1 is rotated by 180 degrees on a horizontal plane, the main body 2, which is in a state as shown in Fig.1 prior to such a rotation, becomes in a state in which the right and left and top and bottom thereof are reversed, as shown in Fig. 2. In addition, the game image IG is turned upside down from a normal positional state as shown in Fig.1. In other words, in a case the portable game apparatus 1 as shown in Fig.1 is held with the right hand 21 and the left hand 20, the game image IG becomes in a reverse positional state, in which the game image IG is turned downside up on the display for the user. In such a case, the display position of the operation button 19 is also switched from the left lower position LDP of Fig.1 to the right upper position RUP of Fig.2.

In such a state, visibility of the game screen and operability of the operation button 19 are extremely bad for the left-handed user since the game image IG is reversed and the position of the operation button 19 is changed into the right upper hand of the screen 3a of the display 3.

Then, in a case where is the attitude detecting controller 11 determines that the main body 2 has been rotated by 180 degrees on a horizontal plane in a predetermined time, the attitude detecting controller 11 determines that the user has inputted the request for changing the dominant hand setting, and the signal S1 for requesting the procedure of changing the dominant hand is outputted to the input interface display controller 12 serving as means for reversing image to be controlled. Receiving the signal S1, the input interface display controller 12 switches the dominant hand setting state stored in a memory (not shown) from the right-handed state to the left-handed state. When the dominant hand setting state is switched from the right-handed state to the left handed state, the input interface display controller 12 subsequently starts the procedure for changing the dominant hand setting. Concretely speaking, the game image IG that is presently displayed on the display 3 is reversed by 180 degrees from the display state as shown in Fig.1 that has been displayed before starting to rotate the main body 2 on a horizontal plane so as to display upside down. In other words, the game progress controller 9 is instructed to reverse the game image IG upside down from the display state as shown in Fig.1, that is, to switch the display state into the normal positional state with the main body 2 having been rotated by 180 degrees.

Receiving this instruction, the game progress controller 9 immediately reverses the game image IG upside down as shown in Fig.2, and makes the game image IG to be in the normal positional state with the main body 2 being in the reverse state (the state that the top and bottom are turned over from the former state). After the dominant hand setting state in a memory is switched from the right-handed state to the left-handed state, the input interface display controller 12 changes the display position of the operation button 19 (the operation key) from a right upper position RUP of Fig.2 to the display position of the left-handed state stored in the memory, that is, to a right lower position RDP of Fig.2 on the display 3 of the main body 2 in the reverse state. Along with such a processing procedure of changing the display position of the operation button (operation key) 19, the touch panel input section 5 switches a program for controlling the operation button (operation key) for controlling touch input operations of the touch panel input section 5 from a program for controlling the operation button (operation key) to be used at the time when the operation button (operation key) 19 is displayed at a left lower position LDP of Fig.1 (right upper position RUP of Fig.2) into a program for controlling the operation button (operation key) to be used at the time when the operation button 19 is displayed at the right lower position RDP of Fig.2. This enables the user to make input to a predetermined operation button 19 by touching the operation button (operation key) 19 displayed at the right lower position RDP of Fig.2 of the display 3.

As mentioned above, the positions at which the operation keys should be displayed is stored in the memory in association with the dominant hand setting state for both the right-handed person and the left-handed person, and , in addition, executable programs for controlling the operation button is stored in the memory in association with the operation keys displayed at the position stored in the memory. Therefore, switching these programs is simple. Then, the touch panel input section 5, that is, the right lower position RDP of Fig.2 of the display 3 becomes effective as input means, and the user can operate the operation button 19 moved to the right lower position RDP of the display 3 with the thumb 21a of the right hand 21.

Subsequently, the left-handed user executes the game by operating the operation button 19 with the thumb 21a of the right hand 21 with the main body 2 being in a state as shown in Fig.2. In a case where a user of the portable game apparatus 1 is switched from the left-handed user to the right-handed user again, the main body 2 of the portable game apparatus 1 is again rotated by 180 degrees on a horizontal plane so as to return to the state of Fig.1 from the state of Fig.2. Then, the 180 degrees of reverse of the main body 2 is detected by the attitude detecting sensor 15 and the attitude detecting controller 11. Then, the dominant hand setting state is switched from the left-handed person into the right-handed person, and the game image IG is reversed from the state of Fig.2 to the state of Fig.1 by the game progress controller 9 and the input interface display controller 12. Then, the display position of the operation button 19 is moved from the right lower position RDP of the display 3 of Fig.2 to the left lower position LDP of Fig. 1 . In addition, the program for controlling operation button is switched from one for the operation button 19 for the left-handed person which has been displayed on the right lower position RDP of Fig.2 into one for the right-handed person which has been displayed on the left lower position LDP of Fig.1 so that the right-handed person can instruct operation with the thumb 20a of the left hand.

The position of the operation button 19 to be located is set in advance by the input interface display controller 12 in association with the respective dominant hand setting states so that in a case where the dominant hand setting state in the portable game apparatus 1 is the right dominant hand, the operation button 19 is located and displayed at the left lower position LDP of the display 3 as shown in Fig.1. Also, in a case where the dominant hand setting state in the portable game apparatus 1 is the left dominant hand, the operation button 19 is located and displayed on the right lower position RDP as shown in Fig.2, as described above. In other words, the input interface display controller 12 stores in advance the position of the operation button 19 to be displayed on the display 3 and the operation button controlling programs in association with the operation button 19 displayed at each position according to the dominant hand setting state, such as the right dominant hand and the left dominant hand, in a proper memory. Thus, the input interface display controller switches the display position of the operation button 19 on the display 3 between the positions of the operation button 19 of the dominant hands that are respectively set whenever the user inputs the request of changing the dominant hand setting by rotating the main body 2 on a horizontal plane. At the same time, the input interface display controller as invalidates the operation button 19 which has been displayed and, in order to validate the operation button 19 newly displayed, the input interface display controller 12 switches the operation button controlling program for each operation button 19 to correspond to the switch of display of the operation button 19. Thus, only the operation button controlling program for the operation button 19 newly displayed is validated. Thus, smooth input switching action is secured.

The display position of the operation button 19 in each dominant hand setting state is not always fixed. That is, the operation button 19 may be located at any position in the up/down direction inside the left side portion of the display 3 in the case of the right-handed person or inside the right side portion of the display 3 in the case of the left-handed person in the normal positional state of the game image IG of the right-handed or left-handed user before and after the rotation of the main body 2 by 180 degrees on a horizontal plane. Similarly, the other user interface elements may be located at proper predetermined positions according to the operations.

In the above description, in the default condition, the user is the right-handed person and the dominant hand setting state in the portable game apparatus 1 is the state of the right handed person as shown in Fig.1, and in order to match the-left handed person, the main body 2 of the portable game apparatus 1 is reversed on a horizontal plane and the dominant hand setting state is switched into the state of the left-handed person as shown in Fig.2 so as to change the game image IG and the operation button 19 in their display forms. On the contrary, in the default condition, the user may be the left-handed person and the dominant hand setting state in the portable game apparatus 1 is the state of the left-handed person as shown in Fig.2, and in order to match the right-handed person, the main body 2 of the portable game apparatus 1 maybe reversed on a horizontal plane and the dominant hand setting state may be switched into the state of the right-handed person as shown in Fig.1 so as to change the game image IG and the operation button 19 in their display forms.

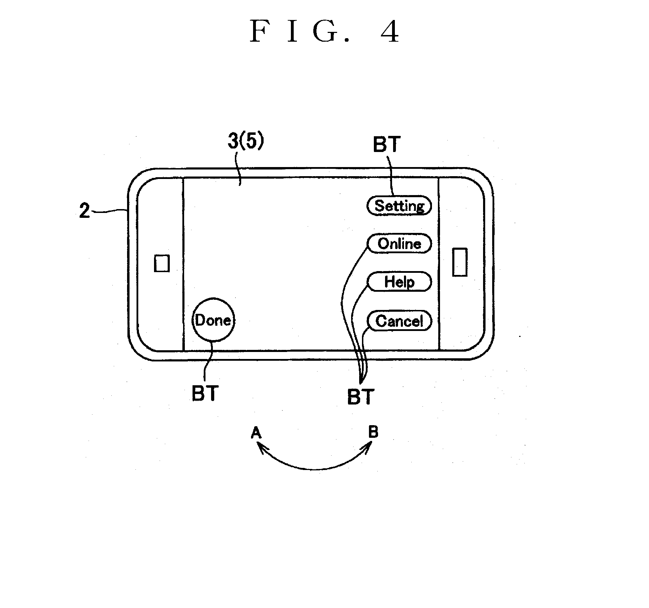

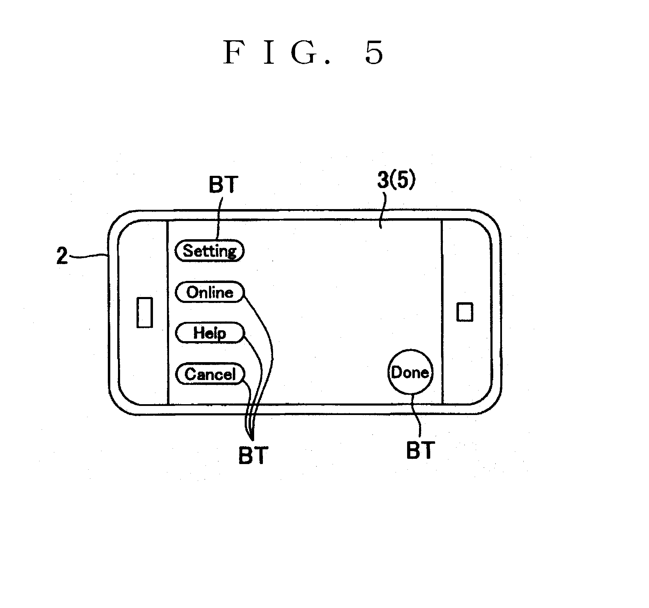

The invention can be also applied to any other user interface elements having any forms and any display positions, such as a button, an icon and a key to be displayed and used as input means of the touch panel input section, as well as the operation button 19 displayed on the display 3. For example, plural buttons BT displayed as the user interface elements, such as icons and keys, are changed in the dominant hand setting state from the display for the right-handed person as shown in Fig.4 into the state as shown in Fig.5 by rotating the main body 2 by predetermined degrees on a horizontal plane so as to being in the display state for the left-handed person according to the invention. The image to be controlled in the invention is not limited to the game image IG, but may be any types of image as long as it is a normal operation image of the application to be executed by the program. In other words, the invention can be applied to any types of portable computer having a display screen that also serves as touch panel input means, such as a music player, an information terminal and a telephone, as well as to the portable game apparatus. In addition, various kinds of buttons BT constituting the user interface elements may be located at any positions and a user may operate these elements in any forms. As shown in the case of Fig.1, the user interface elements may be located on one side of the display 3 so as to enable a user to operate them with one hand, or as shown in Fig.4, the user interface elements may be located on both right and left sides of the display 3 so as enable a user to operate them with both hands.

The above-mentioned embodiment referred to such a case where the attitude detecting controller 11 serving as the rotational angle determining means computes and determines whether the main body 2 is rotated by predetermined degrees on a horizontal plane by detecting the acceleration acting on the main body 2 of the portable computer by the acceleration sensor constituting the attitude detecting sensor 15. However, the signal for computing the rotational speed of the main body is not only the signal from the acceleration sensor constituting the attitude detecting sensor 15. Any sensor can be used as long as the attitude detecting sensor can detect the attitude of the main body 2 on a horizontal plane in real time since it is possible to compute the change of the attitude of the main body on a horizontal plane over time based on the signals outputted from the sensor and thereby to compute the rotational angle of the main body 2 on a horizontal plane. Whether the main body 2 has been rotated by predetermined degrees on a horizontal plane may be computed and determined by computing a difference of the angles of the main body before and after the rotational action with an earth magnetism sensor, a directional sensor, a gyro scope or image of a camera.

The present invention is explained on the basis of the embodiment heretofore. The embodiments which are described in the present specification are illustrative and not limiting. The scope of the invention is designated by the accompanying claims and is not restricted by the descriptions of the specific embodiments. Accordingly, all the transformations and changes belonging to the claims are included in the scope of the present invention.

## Claims

1. A portable computer having a main body and a display provided on the main body that serves also as touch panel input means, which portable computer performs processing corresponding to a user interface element by touching the user interface element displayed at a predetermined display position of the display in accordance with a dominant hand setting, said portable computer comprising:
an attitude detecting sensor that detects an attitude of the main body on a horizontal plane in real time;
a first memory that stores the dominant hand setting of the portable computer, allowing the dominant hand setting to be switched between a setting for a right-handed person and a setting for a left-handed person;
a second memory that stores a display position of the user interface element on the display in association with each of the dominant hand settings for the right-handed person and the left-handed person, and a user interface controlling program corresponding to the user interface element displayed at the display position;
a rotation angle determiner that computes change of the attitude of the main body on the horizontal plane over time based upon signals from the attitude detecting sensor, and determines whether the main body has been rotated by predetermined degrees on the horizontal plane;
a dominant hand setting switching request determiner that determines that the user has inputted a request of switch of the dominant hand setting in a case where the rotation angle determiner determines that the main body has been rotated by the predetermined degrees on the horizontal plane;
a dominant hand setting switcher that switches the dominant hand setting in the first memory into the setting for the dominant hand different from the current setting in a case where of the dominant hand setting switching request determiner has determined that the user has inputted the request of the switch of the dominant hand setting;
a control subject image reverser that displays an image that is a subject to control on the display by reversing the image which has been displayed before the main body has been rotated by predetermined degrees on the horizontal plane by 180 degrees in a case where the dominant hand setting switcher has switched the dominant hand setting into the dominant hand setting different from the current setting; and
a user interface element switcher in a case where the dominant hand setting switcher has switched the dominant hand setting into the setting for the dominant hand different from the current setting, that switches the display position of the user interface element on the display from the display position corresponding to the current dominant hand setting into the display position corresponding to the dominant hand setting switched by the dominant hand switcher that is stored in said second memory and switches the user interface controlling program into the user interface controlling program corresponding to the switched display position of the user interface element that is stored in said second memory.

2. The portable computer according to claim 1, wherein the dominant hand setting switching request determiner has a clocking determiner that determines whether the main body starts to rotate on the horizontal plane and rotates by the predetermined degrees within a predetermined time, and
in a case only where the clocking determiner determines that the main body has started to rotate on the horizontal plane and has rotated by the predetermined degrees within the predetermined time, the dominant hand setting switching request determiner determines that the request of changing the dominant hand setting was inputted from the user.

3. The portable computer according to claim 1, wherein the dominant hand setting switching request determiner determines whether the user has inputted the request of the switch of the dominant hand by parameterizing a form of the rotation of the main body computed based upon output from said attitude detecting sensor.

4. The portable computer according to claim 1, wherein the attitude detecting sensor is a three-dimensional acceleration sensor.

5. The portable computer with touch panel display according to claim 1, wherein the attitude detecting sensor is an earth magnetism sensor.
